# EUROPEAN PATENT APPLICATION

(11) **EP 4 703 925 A1**
(43) Date of publication of application: **04.03.2026**
(21) Application number: 24197976.4
(22) Date of filing: 02.09.2024
(51) Int. Cl.: G06F 21/56, G06F 21/57

(54) **SYSTEM AND METHOD FOR MONITORING SOFTWARE CODE**

(71) Applicant: Nagravision Sàrl, 1033 Cheseaux-sur-Lausanne (CH)
(72) Inventor: AMIET, Nils, 1033 Cheseaux-sur-Lausanne (CH); HAMIEL, Nathan, 1033 Cheseaux-sur-Lausanne (CH)
(74) Representative: Novagraaf International SA

(57) **Abstract**

The method comprises the steps, performed by at least one processor (510, 560), of:
- iteratively identifying (120) in the software code a set of software code elements susceptible to vulnerabilities, at different points in time;
- based on a comparative analysis of a first set of software code elements and a second set of software code elements, respectively identified at a first point in time and at a second point in time, where the second point in time corresponds to a current point in time and the first point in time corresponds to a previous point in time, determining if a trigger condition has been met (170: Yes),
- in a positive event, determining (180) that the software code needs a security analysis.

## Description

### TECHNICAL FIELD

The present disclosure relates to computer security, particularly to a system and method for monitoring a program or software code to detect changes in the program code that may necessitate a security review or audit.

### BACKGROUND

A major issue in computer security is to ensure that software running in production environments remains secure over time. This involves regularly auditing and/or reviewing the software to identify and mitigate potential vulnerabilities. Security audits or reviews, that will be generically referred as security analyses, are essential for maintaining the integrity and confidentiality of data, as well as for ensuring compliance with regulatory requirements. These processes typically include an examination of the complete collection of source code that is used to build a particular software application or system software to identify any weaknesses that could be exploited by malicious actors.

Conducting security audits and/or reviews presents several challenges. One significant obstacle is the dynamic nature of software development, where code changes frequently as new features are added and existing functionalities are modified. This constant evolution can introduce new vulnerabilities that were not present in previous versions of the software. Additionally, the cost and effort required to perform security audits or reviews for every change in the software can be prohibitive, leading to audits or reviews being conducted at fixed intervals rather than continuously. This approach can result in periods where newly introduced vulnerabilities remain undetected until the next scheduled review or audit.

It is known that many companies typically conduct security audits at fixed intervals, such as twice a year or once a year. These audits aim to identify and address security vulnerabilities in the software. However, this approach has limitations. Changes made between audits may introduce vulnerabilities that remain undetected for months, posing a security risk. Conversely, if no significant changes have been made, conducting an audit may be unnecessary, leading to inefficient use of resources. Frequent software security audits take a lot of time to complete, responses are not always accurate, and are often viewed negatively by IT (Information Technology) personnel.

There is thus a need for improving the efficiency and effectiveness of the security auditing or reviewing process, reducing the risk of undetected vulnerabilities and optimizing the use of resources.

### SUMMARY

The present disclosure concerns a method for monitoring a software code, comprising the steps, performed by at least one processor, of:
- iteratively identifying in the software code a set of software code elements susceptible to vulnerabilities, at different points in time;
- based on a comparative analysis of a first set of software code elements and a second set of software code elements, respectively identified at a first point in time and at a second point in time, where the second point in time corresponds to a current point in time and the first point in time corresponds to a previous point in time, determining if a trigger condition has been met,
- in a positive event, determining that the software code needs a security analysis.

This approach offers time-efficient value in security analyses, leading to both cost and time savings.

In an embodiment, a new iteration of the step of identifying in the software code a set of software code elements susceptible to vulnerabilities may be executed upon determining that changes have been made to the software code, for example when a new version of the code is released.

This allows to limit the risks of having vulnerabilities that remain undetected in the code for a long period, while optimizing the use of resources.

Advantageously, the step of determining if the trigger condition has been met may include:
- a step of determining a security risk information representing changes made within the software code between said previous point in time and said current point in time in terms of security risk, based on the comparative analysis of the first set of software code elements and the second set of software code elements;
- a step of comparing the security risk information to a predetermined threshold.

In a particular embodiment, the at least one predetermined threshold includes a high threshold and a low threshold, and
- if the security risk information exceeds the high threshold, determining that the software code needs a security analysis;
- if the security risk information exceeds the low threshold without exceeding the high threshold, determining that the software code will soon need a security analysis.

Advantageously, the previous point in time may be the last point in time, prior to the current point in time, when a set of software code elements have been identified within the software code.

In an embodiment, the step of identifying a set of software code elements susceptible to vulnerabilities within the software code may include:
- a step of determining a programming language and/or framework used to write the code;
- a step of extracting language-specific and/or framework-specific rules from a library of predetermined rules for various languages and frameworks based on the determined programming language and/or framework, each predetermined rule specifying a code pattern to search for;
wherein the step of searching for predetermined code patterns in the code is performed based on the extracted rules.

In an embodiment, the step of identifying a set of software code elements susceptible to vulnerabilities within the software code may include a step of searching for software code elements being part of a predetermined category of operation among one or more predetermined categories of operations.

Advantageously, the method can include a step of adding a predetermined category of operation in a library of predetermined critical operations, through user interface means.

In an embodiment, the method may comprise a step of performing a security analysis on the software code, upon determination that the software code needs a security analysis.

Advantageously, the method may comprise a step of continuously monitoring the program code for modifications.

For example, the step of iteratively identifying in the code a set of software code elements susceptible to vulnerabilities can be executed each time a new version of the software code is released.

The method may comprise at least one of the steps of:
- flagging the software code as due for a security analysis upon determining that the software code needs a security analysis;
- notifying that the software code needs a security analysis.

The present disclosure also concerns:
- a computing system comprising at least one processor and configured to perform the steps of the method previously defined;
- a computer program comprising instructions which, when the program is executed by a computer, cause the computer to carry out the steps of this method;
- a computer-readable medium comprising instructions which, when executed by a computer, cause the computer to carry out the steps of this method.

### BRIEF DESCRIPTION OF THE DRAWINGS

Other features, purposes and advantages of the disclosure will become more explicit by means of reading the detailed statement of the non-restrictive embodiments made with reference to the accompanying drawings.
FIG. 1 illustrates a flow chart diagram of a method for monitoring software code to detect changes that may necessitate a security analysis, according to an embodiment.
FIG. 2 illustrates a flow chart diagram depicting a method for identifying code elements susceptible to vulnerabilities using language-specific rules and predefined categories of operations, according to an embodiment.
FIG. 3 is a block diagram illustrating the components of a system for software code monitoring, according to an embodiment.
FIG. 4 shows a dashboard interface displaying the audit status of various applications within an organization.
FIG. 5 illustrates a timeline of code drift detection events and corresponding security actions, according to the prior art during a first period and according to an embodiment during a second period.

### DETAILED DESCRIPTION

The following detailed description describes various features and functions of the disclosed systems and methods with reference to the accompanying figures. In the figures, similar symbols identify similar components, unless context dictates otherwise. The illustrative system, device and method embodiments described herein are not meant to be limiting. It may be readily understood by those skilled in the art that certain aspects of the disclosed systems, devices and methods can be arranged and combined in a wide variety of different configurations, all of which are contemplated herein.

Ensuring that software running in production environments remains secure over time is crucial for protecting data integrity and confidentiality. Regular security analyses, which include security reviews and audits, are essential for identifying and mitigating potential vulnerabilities. However, the dynamic nature of software development, where code changes frequently, poses significant challenges. Conducting security analyses for every change is often cost-prohibitive and time-consuming, leading to analyses being conducted at fixed intervals. This approach can result in periods where newly introduced vulnerabilities remain undetected until the next scheduled analysis, or in the worst-case scenario, there is a security incident.

The present disclosure addresses this issue by introducing a system that detects changes in software code that may necessitate a security analysis. This system optimizes the timing of security analyses, ensuring they are conducted when necessary and avoiding unnecessary security analyses when no significant changes have occurred. The solution involves iteratively identifying software code elements susceptible to vulnerabilities within the software code. These software code elements are portions of the software (e.g., code lines, sequences). The expression "susceptible to vulnerabilities" means that the software code elements may potentially include vulnerabilities and are therefore recognized as potentially vulnerable, though it is not certain. The system may identify the programming language and/or framework used in the software, determine language-specific and/or framework-specific rules and, based on these rules, use predetermined code patterns for identifying or detecting software code elements including attack surface within the software code. The system may also detect specific software code elements, which belong to predefined categories of critical operations, within the software code. Based on a comparative analysis of the detected software code elements at two different points in time, the system can determine if a trigger condition has been met, indicating the need for a security analysis. If the trigger condition has been met, the need for a security analysis of the software code can be notified for example through a user interface of the system and/or by transmitting a notification to another system or device. Additionally, or alternatively, the software code can be flagged as due for a security analysis. This approach provides value for time when performing security analyses, resulting in cost and time savings. A dashboard can be used to show various applications throughout an organization, providing a stoplight style readout of which applications need a security analysis, allowing security leaders to focus their efforts effectively.

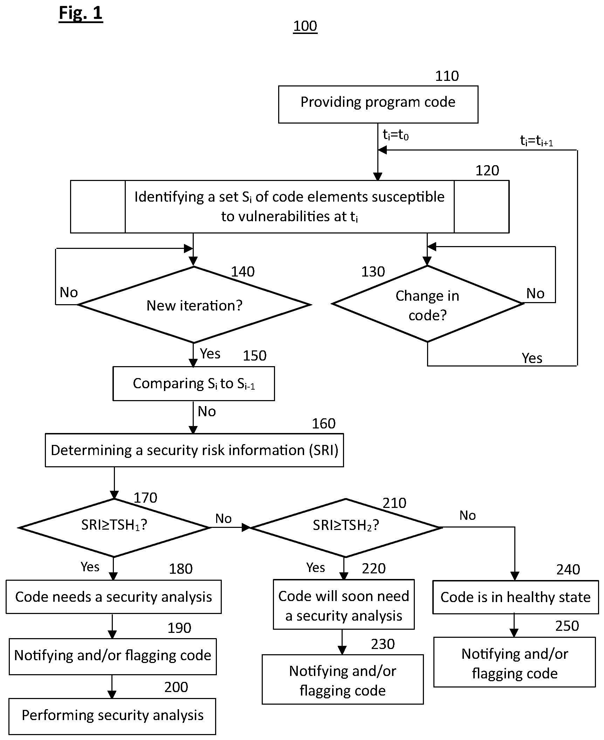

FIG. 1 illustrates a flow chart diagram of a method 100 for monitoring a program code, also referred as "software code" or simply "code", to detect changes that may necessitate a security analysis, according to an embodiment. The method involves several steps, starting from providing the software code and identifying code elements susceptible to vulnerabilities at different points in time, to determining a security risk information and determining whether a security analysis is needed based on the security risk information and optionally predefined threshold(s).

The method 100 can be executed by a computing device or system 500, that will be described later.

The method may include a step 110 of providing the code at time t₀. The code can be provided to the device or system 500 as an input for the process of monitoring the code.

In the present disclosure, the term "code" refers to at least one set of instructions written using at least one programming language and/or framework. These instructions are designed to be executed by a computer to perform specific tasks, functions and/or operations (e.g., controlling hardware and software components).

In some embodiments, the term "code" may specifically refer to a source code that includes human-readable instructions written in a programming language (e.g., Python, Java, C++). It may be written, read and/or modified by a programmer. The code may include one or more source code files for a specific software application or system.

For example, the term "code" may refer to a codebase that includes an entire collection of source code and optionally related files (such as configuration files, scripts, and documentation) for a specific software application or system.

More generally, the term "code" may refer to one or more source code files and optionally related files (such as configuration files, scripts, and/or documentation).

Then, in a step 120, the system 500 processes the program code to identify or detect, within the code, one or more code elements (e.g., portions, areas and/or lines of the code) susceptible to vulnerabilities at a first point in time t₀, so as to generate a set S₀ of code elements susceptible to vulnerabilities. In this way, the system 500 extracts part of the code.

A code element that is "susceptible to vulnerabilities" refers to a code element that may potentially include one or more vulnerabilities or weaknesses and is thus potentially vulnerable, though it is not certain.

It is assumed that, initially, at time t₀, the code is in a first security state, that can be referred as an "healthy state" or "secure state", in which the code does not include any known vulnerability or weakness. For example, the code is for a first version v1 of a software application, that has been analyzed to check for vulnerabilities and, if any vulnerabilities were found, they have been fixed. When the step 120 is executed at time *t*₀, the set *S*₀ of code elements susceptible to vulnerabilities is generated and corresponds to code elements that could potentially include vulnerabilities but should actually not include any vulnerability at time *t*₀ because it is assumed that the code is in the first or healthy or secure state at this time *t*₀.

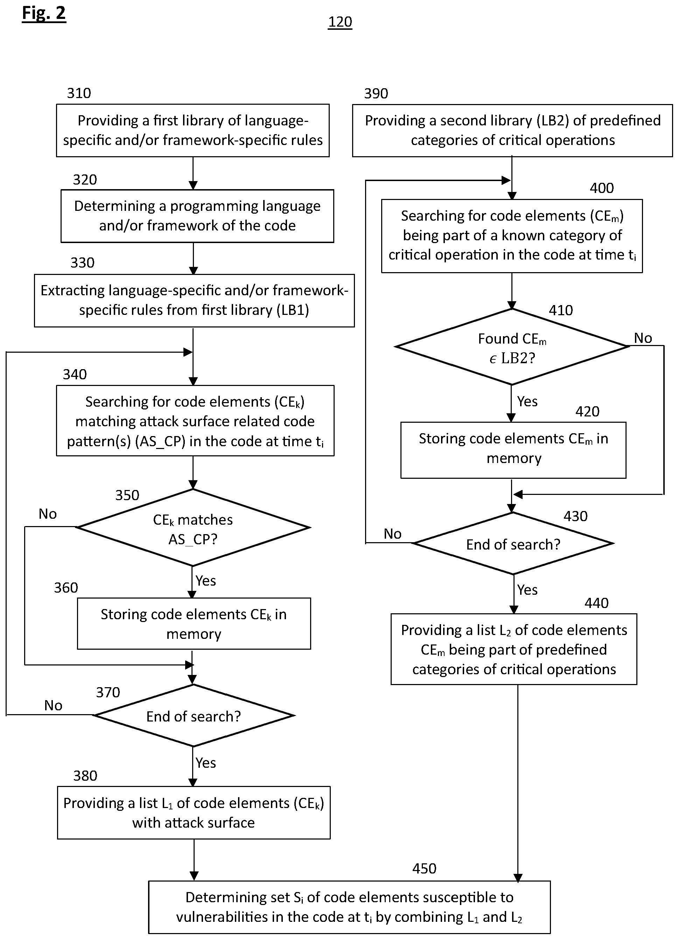

The step 120 of identifying code elements susceptible to vulnerabilities will be described later in more detail with reference to figure 2.

This step 120 is executed in an iterative manner at different, successive points in time *t*₀, *t*₁, *t*₂ ... to identify and generate successive sets *S*₀, *S*₁, *S*₂ ... of code elements susceptible to vulnerabilities at the successive points in time *t*₀, *t*₁, *t*₂ ..., respectively.

In an embodiment, if changes have been made within the code (step 130: Yes), the step 120 is executed again on the program code that has been changed. Thus, the system 500 re-analyzes the modified program code to identify any code elements that may be susceptible to vulnerabilities, which could include new code elements or altered code elements. In figure 1, the step 130 represents a test where the system 500 determines whether any changes have been made to the program code since the last iteration of step 120. The system 500 may continuously monitor (step 130) the program code for modifications (in other words: changes), such as additions or deletions. If no changes are detected (step 130: No), the system 500 maintains a current security state for the code and continues monitoring. If changes are detected (step 130: Yes), the system 500 proceeds to a new iteration of the step 120 to generate a new set of code elements susceptible to vulnerabilities. For example, a new iteration of the step 120 may be performed after each update or new version of the software application, or software system, including the code.

In a variant, the step 120 could be executed at regular intervals.

After the initial time *t*₀, a step 140 represents a test where the system 500 determines whether a new iteration of the step 120 has been or is being performed. If no new iteration of the step 120 is detected (step 140: Yes), the system 500 maintains a current security state for the code and continues monitoring. If a new iteration of the step 120 is detected (step 140: No), the method 100 proceeds to a step 150.

The step 150 involves performing a comparative analysis of a first set of software code elements *Sᵢ* and a second set of software code elements *S*_{*i*-1} respectively generated at *tᵢ* and at *t*_{*i*-1}, where *Sᵢ* may be the current set of code elements and *S*_{*i*-1} a previous set of code elements. In a particular embodiment, the previous set of code elements *S*_{*i*-1} is the last set of code elements preceding to the current set of code elements *Sᵢ*, with the index *i* ≥ 1. The system 500 examines the differences between *Sᵢ* and *S*_{*i*-1} to determine the changes (e.g., extent and nature of these changes) made to the program code within these particular, limited areas (i.e., portions or parts) of the code that are considered as potentially vulnerable. As the comparative analysis focuses on sets of code elements susceptible to vulnerabilities, this determination is focused on specific changes that may have an impact on the security state of the code. Thus, this comparative analysis between *Sᵢ* and *S*_{*i*-1} allows to check whether *Sᵢ* and *S*_{*i*-1} differ and optionally how they differ. Since each element in *Sᵢ* is a piece of code (e.g., text), the process can simply make a difference (e.g., using a standard "diff tool" or "diff function") between the code pieces in *S*_{*i*-1} and *Sᵢ* and check whether any element has been changed or added.

Such a comparative analysis between *Sᵢ* and *S*_{*i*-1} helps in identifying significant changes that may introduce new vulnerabilities or affect existing ones. Thus, it helps detect whether it is likely that some change alters a piece of code that can affect the security of the code. There may be previously undetected vulnerabilities in that piece of code and it may also happen that a new vulnerability was introduced. If changes have been made to the code between *t*_{*i*-1} and *tᵢ*, this comparative analysis allows to determine if at least part of these changes have been made in at least one of the identified code elements susceptible to vulnerability. More precisely, it allows to determine:
- if a code element susceptible to vulnerability present within the previous set *S*_{*i*-1} has been altered in the new set *Sᵢ*, and
- if a code element susceptible to vulnerability, not present in the previous set *S*_{*i*-1}, has been added in the new set *Sᵢ*.

However, if only changes that would not involve any security issues have been made between *t*_{*i*-1} and *tᵢ* but (e.g., the code corresponds to a website and many cosmetic changes - like changes of size and/or color of text - have been made between *t*_{*i*-1} and *tᵢ* ), the comparative analysis results in determining that no code element susceptible to vulnerability has been altered or added.

In a step 160, the system 500 determines or evaluates a security risk information (SRI) based on the comparative analysis between *Sᵢ* and *S*_{*i*-1}. The SRI may represent the significance of the changes made within the program code in terms of potential security risk, how these changes affect the code and may potentially make it more vulnerable by modifying existing code elements susceptible to vulnerability and/or adding new ones.

In an embodiment, the security risk information (SRI) may include a list of code elements or pieces that were changed or added. This list may be obtained by the comparative analysis performed in step 150. These code elements are the ones that are likely to contain vulnerabilities and should be reviewed or analyzed.

Alternatively, or additionally, the system 500 may determine (e.g., compute or measure) a value or quantifiable metric that may be part of the security risk information SRI. This value or metric of the information SRI, that will be termed as "SRI metric", may measure or quantify a need for a security analysis for the code at time *tᵢ*. It can represent a result of the comparison between *Sᵢ* and *S*_{*i*-1}. For example, the SRI may include a counter for simply counting the number of changes detected between *Sᵢ* and *S*_{*i*-1}, such as the total number of code elements susceptible to vulnerabilities altered or added. In another example, this counter may be incremented by different predefined values depending on the changes detected. These predefined values may depend on:
- the nature and/or extent of the changes detected (e.g., modification of an existing code element or addition of a new code element, the number of code elements added or modified); and/or
- the nature or a category of the code element that has been altered or added (e.g., a predefined category of cryptographic operation like authentication, signature, encryption, decryption, signature validation).

Then, the method proceeds to a step 170 for determining whether a trigger condition is met, indicating that a security analysis is needed, based on the security risk information SRI and optionally at least one predetermined first threshold TSH₁. In this step 170, the system 500 may evaluate whether the SRI includes a non-empty list of code element/s susceptible to vulnerability that has/have been altered or added. In other words, the system 500 may evaluate if the list resulting from the comparative analysis (step 150) includes at least one code element (i.e., TSH₁ = 1). Alternatively, the minimal numbers of code elements within the list (trigger condition) may be more than one (i.e., TSH₁ = 2, or 3, ...).

Alternatively, in case the SRI includes a metric or value quantifying the need for a security analysis for the code at time *tᵢ* (step 160), this metric can be compared to a predetermined threshold TSH₁, indicating a high level of security risk, based on a comparison of the SRI value.

Thus, the trigger condition may refer to:
- a non-empty list of code elements resulting from the comparative analysis in step 150, or
- a first threshold TSH₁, the trigger condition being met if this threshold TSH₁ is reached or exceeded.

If the trigger condition is met (e.g., a non-empty list of code elements is found in step 150, or the SRI value or metric determined in step 160 is equal to or exceeds TSH₁, step 170: Yes), the system 500 determines that the program code needs a security analysis, preferably an immediate security analysis (i.e., at time *tᵢ*). In other words, the system 500 determines that the program code, or the software application or system including this program code, is in a second security state (different from the first security state), that can be referred as a "danger state" or "unsecure state", in which the code may potentially include one or more vulnerabilities or weaknesses and needs an immediate security analysis to check if the code actually includes one or more vulnerabilities.

Upon determining that the code needs a security analysis, the system 500 may then flag the program code and/or the related application (i.e., the software including this code) for a security analysis, or as "due for a security analysis", in a step 190. Additionally, or alternatively, the system 500 may notify that the program code needs a security analysis, for example by an alert through user interface means and/or by sending a message to another system or device.

Then, in a step 200, the system 500 may execute a security analysis on the program code. This step involves a thorough examination of the code (or alternatively only of the detected code elements that have been altered or added) to detect and mitigate any vulnerabilities. The security analysis may include code reviews, audits, and/or penetration testing to ensure the code 110 is secure. It can be executed by a security analysis tool or system and/or by an operator.

It is important to note that the security analysis process is not part of the method for monitoring; it is optional. If the code is found to be due for a security analysis, any other approach could be considered. For example, the system could stop using the code or the application including the code until a security analysis is executed later. Such a security analysis is a well-known operation that will not be described in more detail in the present disclosure.

In an embodiment, the threshold TSH₁ may be a first, high threshold, among at least two thresholds TSH₁ and TSH₂.

If the trigger condition is not met, for example because the SRI metric does not exceed TSH₁ (step 170: No), the system 500 may proceed to the next step.

In a particular embodiment, this next step may include a determination 210 whether a security analysis will soon be needed (i.e., at a time later than the present time, for example after the next time when changes are made to the code) based on the security risk information SRI and at least one predetermined second threshold TSH₂, such as a low threshold, different from the first (high) threshold TSH₁. The low threshold TSH₂ is lower than the high threshold TSH₁. In this step 210, the system 500 may evaluate whether the SRI metric is equal to or exceeds TSH₂, indicating a medium level of security risk, based on a comparison of the SRI value, determined in the step 160, to the second (low) threshold TSH₂.

If the SRI metric is equal to or exceeds TSH₂ (step 210: Yes), the system 500 determines that the program code will soon need a security analysis at a time later than the present time, for example after the next time when changes are made to the code. In this way, the system 500 determines that the program code, or the software application or system including this program code, is in a third security state (different from the first and second security states), that can be referred as a "warning state", in which it is estimated that the code does not immediately need a security analysis as in the second state (danger or unsecure state) but may soon be in this second state "due for security analysis".

Upon determining that the code will soon need a security analysis, the system 500 may then flag the program code and/or the related application (i.e., the software including this code), as "will soon be due for a security analysis", in a step 230. Additionally, or alternatively, the system 500 may notify that the program code will soon need a security analysis, for example by an alert through user interface means and/or by sending a message to another system or device.

If the SRI metric does not exceed TSH₂ (step 210: No), the system 500 proceeds to the next step.

In an embodiment, this next step includes a step 240 of determining that the code does not need a security analysis at the present time. Thus, the system 500 determines that the program code, and/or the software application or system including this program code, is in the first security state or healthy state.

The step 240 may be followed by a step 250 of flagging the program code and/or the related application as "healthy" or "secure" or with the indication that no immediate security analysis is needed (i.e., at the present time). Additionally, or alternatively, the system 500 may notify that there is no immediate need for a security analysis, for example by a message delivered through user interface means and/or sent to another system or device.

The steps 210-230 are optional. In an embodiment, if the trigger condition is not met (e.g., the SRI metric does not exceed TSH₁, step 170: No), the system 500 may directly proceed to the step 240 and determine that the code does not need a security analysis and is in a secure state.

In the present description, the system 500 generates successive sets of code elements *S*₀, *S*₁, *S*₂ ... and, after each new set is generated, it is compared with the last set. In a variant, the generation and the comparison may be combined in such a way that, in the step 120, for *i* ≥ 1, the system 500 generates a set of code elements susceptible to vulnerabilities only including altered code elements and added code elements.

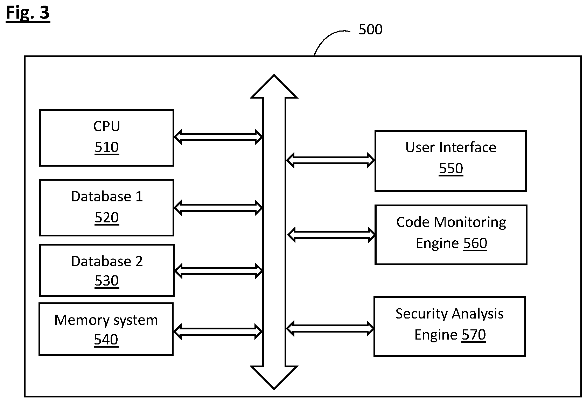

FIG. 2 shows in more detail the step or process 120 for identifying software code elements susceptible to vulnerabilities to generate the set *Sᵢ* of code elements at any time *tᵢ*, using here language-specific and optionally framework-specific rules and predefined categories of operations, according to an embodiment. The process 120 can be implemented by a system or device such as the system 500 that will be described later with reference to FIG. 3.

At step 310, the process 120 includes providing a first library LB1 of language-specific and/or framework-specific rules. This library contains predefined rules that are specific to various programming languages and frameworks. The language-specific rules in a programming language refer to guidelines, conventions, and/or structures that govern how code must be written in that language. These rules ensure that the code is syntactically correct and can be compiled or interpreted by a language's compiler or interpreter. A framework is a set of pre-written code and tools that provide a structure for building software applications, helping developers avoid repetitive tasks and focus on specific functionalities.

The code can use one or more programming language(s) and/or framework(s). At step 320, the process 120 includes determining the programming language(s) and/or framework(s) of the code. This step is for selecting the appropriate rules from the first library LB1.

At step 330, the process 120 extracts language-specific and/or framework-specific rules from the first library LB1 based on the determined programming language(s) and/or framework(s). These rules are then used to identify code elements susceptible to vulnerabilities. Each predetermined rule extracted from the first library LB1 may specify a code pattern to search for.

At step 340, the process 120 includes searching for code elements matching specific attack surface-related code patterns in the code at a current time tᵢ. This process 120 can be performed using an analysis tool like Semgrep designed to search for patterns in source code. These code patterns are defined by the extracted rules. They can include identifying specific sequences of code that may potentially include a vulnerability, finding instances of a particular function call, matching endpoint function definitions (e.g., if the code or application uses a Flask web framework for Python programming language), etc. An attack surface-related code pattern corresponds to a predetermined code pattern for identifying software code elements with points of attack surface. The "attack surface" refers to all the potential points of vulnerability in the code that an attacker could exploit, in other words all the different areas where the code can be compromised. A point of attack surface is a specific area or component within the code (e.g., a sequence of code lines) that could be targeted by an attacker to exploit a vulnerability. It is a potential entry or interaction point where an attacker could attempt to breach the system, such as a user login portal, an API endpoint, any form submitted to a user (e.g., in a registration page, in a comment box), etc. Each of these points represents a place where security measures need to be applied to protect the system from being compromised. Reducing the attack surface of the code minimizes the opportunities for attacks, making the code more secure.

At step 350, the process 120 checks if a code element matching an attack surface-related code pattern has been detected within the code. If a match is found (step 350: Yes), the process 120 proceeds to step 360; otherwise, the process continues searching (step 370: No) until the entire code has been analyzed (step 370: Yes).

At step 360, the process 120 stores the code element that matches the attack surface-related code pattern in memory. The stored elements are part of the set *Sᵢ* of code elements susceptible to vulnerabilities.

At step 370, the process 120 checks if the search for code elements has ended. If the search has ended, typically when the entire code has been searched for code elements, the process 120 proceeds to step 380 (step 370: Yes); otherwise (step 370: No), the process continues searching, as previously described.

At step 380, the process 120 provides a first list L1 of code elements with attack surface. This list L1 includes all the code elements identified in the previous steps 340-370.

At step 390, the process 120 involves providing a second library LB2 of predefined categories of operations, functions and/or tasks. This library LB2 contains categories of operations that are known to be critical for security. An operation may be critical for security as it involves highly sensitive information or processes that, if compromised, could lead to significant security risks. Examples of such categories of operations may include database queries, authentication, and any other cryptographic operations (e.g., encryption, decryption, digital signature, validation of signature, etc.).

The second library LB2 may be provided by a provider of the system 500 for monitoring code. Additionally, or alternatively, the second library LB2 could include one or more categories of operations, tasks and/or functions defined by a user. The process 120 may include a step of adding a predetermined operation in the library LB2, through user interface means. It may also include a step of modifying or deleting a predetermined critical operation within the library LB2, through the user interface means.

At step 400, the method 120 searches for code elements being part of one or more predefined categories of operations from the library LB2 within the code at time *tᵢ*. Different approaches can be used to achieve the step 400. A first approach is based on predefined code patterns and involves searching for these predefined code patterns within the code, similarly to the step 340 of searching for code elements matching attack surface related code patterns. A second approach is based on the use an artificial intelligence model, such as a LLM (Large Language Model), for example as an Oracle LLM, to determine whether a portion or fragment of the code, including for example a plurality of code lines, is responsible for a specific task (or operation, or function) or not. For example, the system 500 may pick or extract blocks of at least one line of code, for example blocks of N lines with *N* ≥ 1 (N could be fixed or variable), and request the LLM to determine whether this block appears to be similar to any predefined category of critical operation within the library LB2. In a positive event, this block of code lines can be classified as a critical component. This second approach, based on an artificial intelligence model, can be used to identify code elements as being part or not of the categories of critical operations from the second library LB2.

At step 410, the process 120 checks if a code element is found in the second library LB2. If a match is found (step 410: Yes), the process 120 proceeds to step 420; otherwise, the method continues searching (step 430: No) until the entire code has been analyzed (step 430: Yes).

At step 420, the method 120 stores in memory the code element matching a category of critical operation within the second library. These stored elements are part of the set *Sᵢ* of code elements susceptible to vulnerabilities.

At step 430, the process 120 checks if the search for code elements based on the predetermined categories of critical operations has ended. If the search has ended (step 430: Yes), typically when the entire code has been searched for code elements, the process 120 proceeds to step 440; otherwise (step 430: No), the process 120 continues searching, as previously described.

At step 440, the method 120 provides a second list L₂ of code elements being part of the predefined categories of operations. This list L₂ includes the code elements identified in the previous steps 400-430.

At step 450, the process 120 combines the two lists of code elements L₁ and L₂ to determine the set *Sᵢ* of code elements susceptible to vulnerabilities found in the code at time *tᵢ*. This combined set represents all the code elements that are found as potentially vulnerable. It may include the sum of the two lists L₁ and L₂. The redundant code elements could be deleted.

The two searches can be performed in parallel to one another or sequentially. In another embodiment, only one of the two searches could be performed.

The operations of method 100 described with reference to FIG. 1 and 2 are intended to be illustrative. Method 100 may include one or more operations, functions, or actions, as illustrated by one or more of blocks and arrows. Although the blocks may be illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for the method 100 and other processes and methods disclosed herein, the flowchart shows functionality and operation of one possible implementation of present embodiments. In this regard, each block may represent a module, a segment, a portion of a manufacturing or operation process, or a portion of program code, which includes one or more instructions executable by a processor for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, for example, or a tangible storage device.

In addition, for the method 100 and other processes and methods disclosed herein, each block may represent circuitry that is wired to perform the specific logical functions in the process, for example.

FIG. 3 shows a computing system or device 500 for monitoring software code to detect changes that may necessitate a security analysis, according to an embodiment. The system 500 is configured to execute the method 100 for monitoring the code. It includes hardware means and software means.

The system 500 may comprise at least one processor or CPU 510, a first database 520, a second database 530, a memory system 540, a user interface 550, a code monitoring engine (CME) 560, and a security analysis engine (SAE) 570.

The CPU 510 is configured to manage and execute instructions for the system 500. It processes data and controls the operations of other components within the system 500.

The first database 520 stores the first library LB1 containing predefined language-specific and optionally framework-specific rules and patterns. The first database 520 provides the necessary data for the CME 560 to search the code elements of the second list L1.

The second database 530 contains the predefined categories of operations used by the system 500 to identify code elements susceptible to vulnerabilities (in step 400). The second database 530 provides the necessary data for the CME 560 to search the code elements of the second list L2.

The memory system 540 may store the software code being monitored and information related to this software code. This information may include historical data, code version(s), and other relevant metadata necessary for the monitoring process.

The memory system 540 may be configured to store data and instructions that the CPU 510 and other components of the system 500 need to access.

The user interface 550 allows users to interact with the system 500. The user interface 550 may include means or components to display information, receive user inputs, and provide notifications and/or information regarding the status of the software code monitoring and security analysis processes.

The code monitoring engine (CME) 560 is responsible for analyzing the software code to identify code elements susceptible to vulnerabilities. The CME 560 uses data from the databases 520, 530 and applies searching strategies, as previously described, to detect code elements that may potentially include security vulnerabilities or weaknesses within the code.

The security analysis engine (SAE) 570 is responsible for performing a security analysis on the software code, for example when the CME 560 identifies changes that need a security analysis. The SAE 570 can evaluate if the code includes vulnerabilities. Optionally, the SAE 570 may be configured to implement the following security measures:
- providing information on the detected vulnerabilities, for example through the user interface 550;
- providing recommendations on actions to be performed for fixing the detected vulnerabilities, through the user interface 550;
- directly fixing at least part of the detected vulnerabilities in the code.

The above-mentioned measures ensure that the software code remains secure over time.

In another embodiment, the SAE 570 may not be part of the computing system or device 500. It may be part of another computing system or device (not represented).

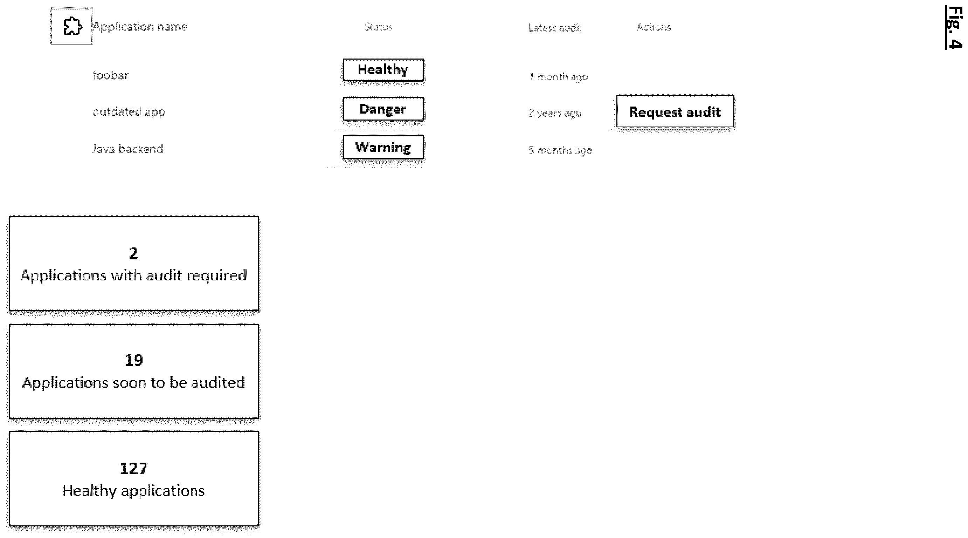

FIG. 4 shows an example of a graphical user interface, such as a dashboard interface, displaying the security states of various applications for example within a computer system or within an organization. The dashboard displays a list of applications (only partially shown in FIG. 4) and, for each application, information on a security status or state (e.g., "healthy/secure", "warning", "danger/unsecure"), on when the last audit was completed, and on recommended actions to be taken. The dashboard also categorizes all the applications into three distinct groups - applications with audit required, applications soon to be audited, and healthy applications - and counts the number of applications in each group.

The applications with audit required represent the group of applications that have been identified as needing an immediate security analysis. These applications have likely undergone significant changes or have been flagged due to security analysis.

The applications soon to be audited include applications that are approaching the first (high) threshold TSH₁ for requiring a security analysis (these applications have a SRI between the high threshold TSH₁ and the low threshold TSH₂). These applications may have undergone recent changes that indicate a potential need for a security analysis in the near future, for example after next changes, but they do not yet require immediate security analysis.

The healthy applications are those that have been determined to be in a secure state with no immediate need for a security analysis. These applications have either not undergone significant changes or have been recently audited and found to be free of vulnerabilities.

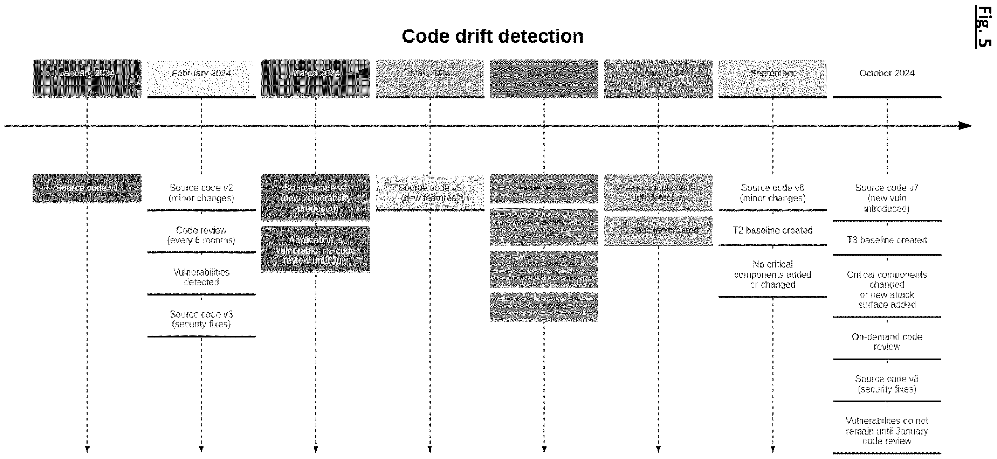

FIG. 5 illustrates an illustrative and non-limitative example of a code drift detection timeline tracking the evolution of software code versions and associated security actions from January to October 2024. From January to July 2024, a code review, that is a security analysis of the code, is performed at fixed time intervals, for example every six months, as known from the prior art. Starting from August 2024, the method 100 of monitoring the code, according to the present disclosure, is implemented.

The timeline begins in January 2024 with source code v1. Subsequent updates are released from February to May (code versions v1 to v5).

In February 2024, the code version v2 with minor changes is released and a code review is executed. Some vulnerabilities are detected and fixed. Then, the code version v3 is released.

In March 2024, the code version v4 with changes that have introduced new vulnerabilities is released. The application is therefore vulnerable but no security analysis or review of the code is performed.

In May 2024, the code version v5 with new features is released but no security analysis is performed.

In July 2024, a code review is executed. Some vulnerabilities are detected and fixed. Then, the secure code version v5 is released.

From August 2024, the method 100 of monitoring the code is used to track the evolution of software code versions and take the necessary security actions to secure the code. The secure code version v5 is provided as a first input to the method 100 of monitoring the code. A first set S₁ of code elements susceptible to vulnerabilities is detected based on the code version v5.

In September 2024, a new code version v6 with minor changes is released. The code version v6 is provided as a new input to the method 100. A second set S₂ of code elements susceptible to vulnerabilities is detected based on the code version v6. A security risk information is computed based on a comparison between S₁ and S₂. Then, it is determined that the value of SRI is below both the first threshold TSH₁ and second threshold TSH₂. It is thus determined that no significant changes that would require an immediate security analysis have been made in the code between the version v5 and the version v6. Consequently, no code review is executed in September 2024.

In October 2024, a new code version v7 with significant changes (i.e., changes potentially introducing vulnerabilities in the code) is released. The new code version v7 is provided as a new input to the monitoring method 100. A third set S₃ of code elements susceptible to vulnerabilities is detected based on the code version v7. A security risk information is computed based on a comparison between S₂ and S₃. Then, it is determined that the value of SRI exceeds the first threshold TSH₁. It is thus determined that significant changes that require an immediate security analysis have been made in the code between the version v6 and the version v7. Consequently, a code review is requested by the system 500 and is executed in October 2024, without delay. This code review allows to detect vulnerabilities introduced in the code version v7. Then, these vulnerabilities are fixed and a new secure code version v8 is released.

The technical advantages provided by the present method 100 of monitoring the code include:
- an optimized timing of security analyses: the method 100 ensures that security analyses are conducted only when significant changes are detected, avoiding unnecessary code audits or reviews and optimizing resource use;
- an early detection of vulnerabilities: by continuously monitoring code changes and comparing sets of code elements susceptible to vulnerabilities, the system 500 can detect potential vulnerabilities early, reducing the risk of undetected issues;
- cost and time savings: the system 500 provides value for time when performing security analyses, resulting in cost savings for external auditors and time savings for internal staff;
- automated decision-making: the system 500 automatically determines when a security analysis is needed based on predefined thresholds, reducing the need for manual intervention and ensuring timely responses to potential security risks;
- improved security posture: by promptly identifying and addressing vulnerabilities, the system 500 helps maintain a secure code, enhancing the overall security posture of the software application or system.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method (100) for monitoring a software code, comprising the steps, performed by at least one processor (510, 560), of:
- iteratively identifying (120) in the software code a set of software code elements susceptible to vulnerabilities, at different points in time;
- based on a comparative analysis of a first set of software code elements (*S*_{*i*-1}) and a second set of software code elements (*Sᵢ*), respectively identified at a first point in time (*t*_{*i*-1}) and at a second point in time (*tᵢ*), where the second point in time (*tᵢ*) corresponds to a current point in time and the first point in time (*t*_{*i*-1}) corresponds to a previous point in time, determining if a trigger condition has been met (170: Yes),
- in a positive event, determining (180) that the software code needs a security analysis.

2. The method according to claim 1, wherein a new iteration of the step of identifying (120) in the software code a set of software code elements susceptible to vulnerabilities is executed (130: Yes) upon determining that changes have been made to the software code.

3. The method according to claim 1 or 2, wherein the step of determining if the trigger condition has been met includes:
- a step (160) of determining a security risk information representing changes made within the software code between said previous point in time (*t*_{*i*-1}) and said current point in time (*tᵢ*) in terms of security risk, based on the comparative analysis of the first set (*S*_{*i*-1}) of software code elements and the second set (*Sᵢ*) of software code elements;
- a step (170) of comparing the security risk information to a predetermined threshold.

4. The method according to claim 3, wherein the at least one predetermined threshold includes a high threshold and a low threshold, and
- if the security risk information exceeds the high threshold (170: Yes), determining that the software code needs a security analysis;
- if the security risk information exceeds the low threshold without exceeding the high threshold (210: Yes), determining that the software code will soon need a security analysis.

5. The method according to any of claims 1 to 4, wherein the previous point in time (*t*_{*i*-1}) is the last point in time, prior to the current point in time (*tᵢ*), when a set of software code elements have been identified within the software code.

6. The method according to any of claims 1 to 5, wherein the step (120) of identifying a set of software code elements susceptible to vulnerabilities within the software code includes a step (340) of searching for software code elements matching predetermined code patterns for identifying software code elements with points of attack surface.

7. The method according to claim 6, wherein the step (120) of identifying a set of software code elements susceptible to vulnerabilities within the software code includes
- a step (320) of determining a programming language and/or framework used to write the code;
- a step (330) of extracting language-specific and/or framework-specific rules from a library of predetermined rules for various languages and frameworks based on the determined programming language and/or framework, each predetermined rule specifying a code pattern to search for;
wherein the step (330) of searching for predetermined code patterns in the code is performed based on the extracted rules.

8. The method according to any of claims 1 to 7, wherein the step (120) of identifying a set of software code elements susceptible to vulnerabilities within the software code includes a step (400) of searching for software code elements being part of a predetermined category of operation among one or more predetermined categories of operations.

9. The method according to claim 8, comprising a step of adding a predetermined category of operation in a library of predetermined critical operations, through user interface means.

10. The method according to any of claims 1 to 9, further comprising a step (200) of performing a security analysis on the software code, upon determination that the software code needs a security analysis.

11. The method according to any of claims 1 to 10, wherein the step (120) of iteratively identifying in the code a set of software code elements susceptible to vulnerabilities is executed each time a new version of the software code is released.

12. The method according to any of claims 1 to 11, comprising a step (130) of continuously monitoring the program code for modifications.

13. The method according to any of claims 1 to 11, including at least one of the steps of:
- flagging (190) the software code as due for a security analysis upon determining (180) that the software code needs a security analysis;
- notifying (190) that the software code needs a security analysis.

14. A computing system comprising at least one processor and configured to perform the steps of the method according to any of claims 1 to 12.

15. A computer program comprising instructions which, when the program is executed by a computer, cause the computer to carry out the steps of the method according to any of claims 1 to 12.
